# EUROPEAN PATENT SPECIFICATION

(11) **EP 0 508 440 B1**
(45) Date of publication and mention of the grant of the patent: **06.03.1996**
(21) Application number: 92106208.9
(22) Date of filing: 10.04.1992
(51) Int. Cl.: G21C 3/334

(54) **Fuel assembly for a nuclear reactor**
Brennstabbündel für Kernreaktor
Assemblage de combustible pour réacteur nucléaire

(30) Priority: 11.04.1991 SE 9101084
(43) Date of publication of application: 14.10.1992
(73) Proprietor: ABB ATOM AB, S-721 83 Västeras (SE)
(72) Inventor: Johansson, Lennart, S-722 33 Västeras (SE)
(74) Representative: Boecker, Joachim, Dr.-Ing.

(56) References cited:
- DE-A- 2 032 587
- FR-A- 2 341 917
- FR-A- 2 539 548
- GB-A- 2 062 937

## Description

The invention relates to a fuel assembly for a nuclear reactor, preferably of PWR type, according to the precharacterising part of claim 1.

A fuel assembly of a known design comprises a plurality of parallel fuel rods and control rod guide tubes, wherein fuel rods and guide tubes are retained into an elongated bundle in predetermined mutual positions by means of a number of spacer grids, referred to below simply as spacers. These spacers are spaced along the bundle and extend across the bundle. Top and bottom nozzles are arranged at the ends of the fuel assembly and attached to the control rod guide tubes, which extend somewhat above and below the ends of the fuel rods. In known fuel assemblies each control rod guide tube has been fixed to the bottom nozzle by means of a screw extending through the bottom nozzle and threaded into a corresponding thread in an end plug fixed to the control rod guide tube. This, in turn, has tended to give rise to an axial rotation of the control rod guide tube. Such a rotation may cause a built-in torsional stress in the guide tube, which in turn may lead to the fuel bundle, after irradiation, becoming spirally twisted. This may eventually lead to handling problems when transferring fuel in the core, which, of course, entails a serious drawback.

A fuel assembly of the afore-mentioned kind is known from the GB-A-2 062 937. A lower sleeve, which receives the lower end of a guide tube, is attached to the lowermost spacer and extends towards the upper plane of the bottom nozzle plate. The guide tube is welded to a plug member, and a bolt, axially fixed to the bottom nozzle plate, is screwed into said plug member. The lower end of the sleeve extends inwardly thus forming a circular flange positioned between the end plug and the nozzle plate. End plug and sleeve are shaped as revolution bodies.

The invention aims at designing a fuel assembly for a nuclear reactor of the above-mentioned kind the guide tubes of which are free of torsional stresses due to their fixing to the bottom nozzle.

To achieve this aim the invention suggests a fuel assembly for a nuclear reactor according to the introductory part of claim 1, which is characterized by the features of the characterizing part of claim 1.

Further developments of the invention are characterized by the features of the additional claims.

According to the invention, the above described drawback is avoided by providing means which lock the guide tube in such a manner to the bottom sleeve that it can not perform any rotational movement relative to the bottom sleeve when the guide tube is being screwed to the bottom nozzle. Because the bottom sleeve, in its turn, is rigidly fixed in the bottom spacer, the guide tube is prevented from rotating when, as described above, it is screwed to the bottom nozzle.

By way of example, the invention will now be described in greater detail with reference to the accompanying drawings showing in
- Figure 1: a fuel assembly without fuel rods for a PWR type reactor,
- Figure 2: an enlarged section along A-A in Figure 1 of, inter alia, a bottom sleeve fixed in the bottom spacer,
- Figure 3: a section along B-B in Figure 2,
- Figure 4: an exploded view of a fuel assembly with only a few fuel rods and guide tubes inserted,
- Figure 5: an enlarged view of an end plug provided with tongues according to the invention,
- Figure 6: an enlarged view of the lower part of the bottom sleeve rigidly fixed in the bottom spacer.

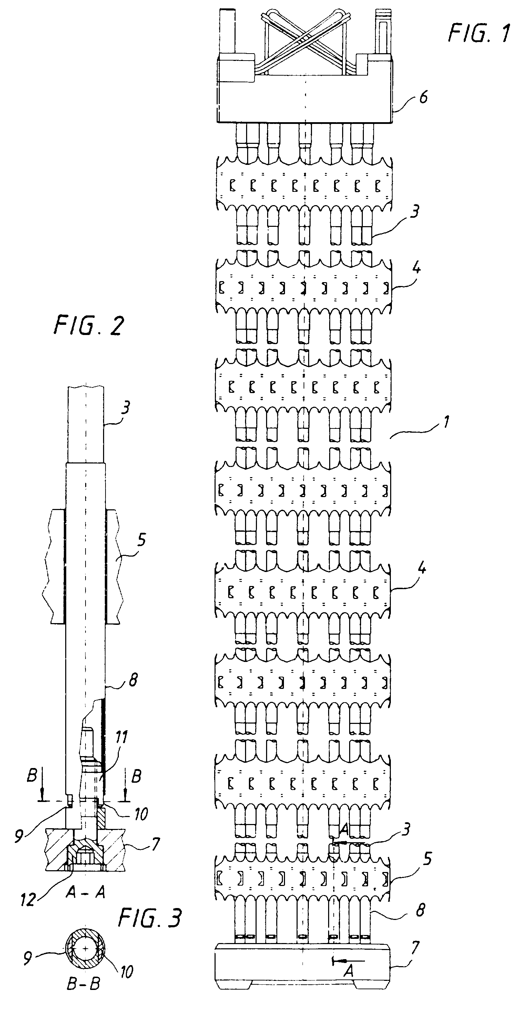

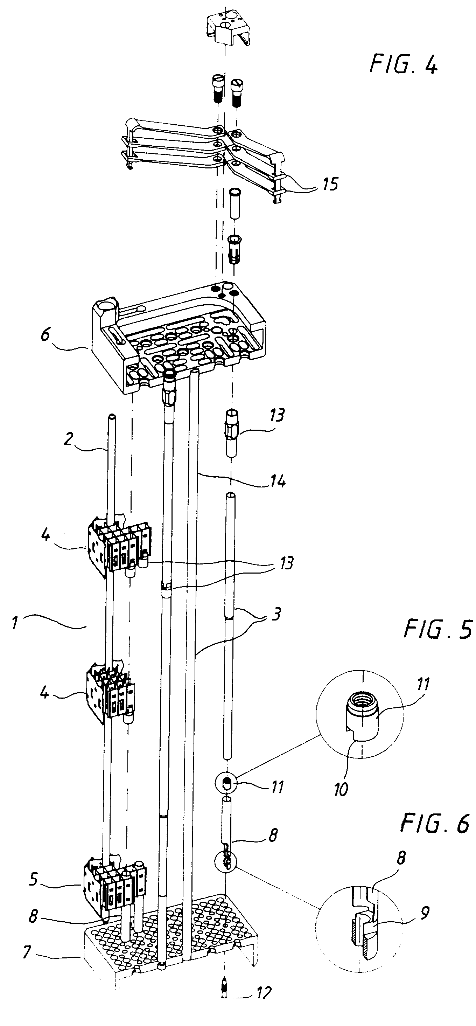

Figure 1 shows a fuel assembly 1 for a nuclear reactor of PWR type. It is composed of fuel rods 2 (not shown in Fig. 1; see Fig. 4) and guide tubes 3 for control rods. Fuel rods 2 and guide tubes 3 are retained into an elongated bundle by a number of spacers 4 arranged along the bundle and each extending across the bundle. The spacer positioned nearest to the bottom is named bottom spacer 5. The bundle is connected to a top nozzle 6 and a bottom nozzle 7 by means of the guide tubes 3. In the bottom spacer 5, bottom sleeves 8 for the guide tubes 3 are rigidly fixed. The bottom sleeves 8 rest against the bottom nozzle 7 and are provided with first locking members in the form of slots 9 for receiving second locking members, arranged at the end of the guide tubes 3, in the form of tongues 10 (Fig. 2) whereby the guide tubes 3 are rigidly fixed.

Figure 2 shows in enlarged form how the bottom sleeve 8 is fixed in the bottom spacer 5. The bottom sleeve 8 has such a diameter that a guide tube 3 with an associated end plug 11 may be inserted into the bottom sleeve 8. The end plug 11 which is rigidly fixed to the guide tube 3 is provided with tongues 10 which fit into slots 9 provided in the bottom sleeve 8. Through the bottom nozzle 7, a guide tube screw 12 is screwed into the end plug 11 whereby the guide tube 3 is fixed to the bottom nozzle 7 without giving rise to any torsional stresses in the guide tube 3. Figure 3 shows how the tongues 10 fit into the slots 9.

In Figure 4, 2 designates a fuel rod and 3 guide tubes. Each spacer 4 comprises a grid by means of which fuel rods 2 and guide tubes 3 are mutually fixed so as to form a bundle. 13 designates sleeves for the guide tubes 3, and 14 designates an instrumentation tube. The bundle is fixed between a top nozzle 6 and a bottom nozzle 7. The top nozzle 6 is provided at the top with a spring package 15 intended to keep the fuel assembly 1 in position in the reactor core. Bottom sleeves 8 are welded in the bottom spacer 5. The bottom sleeves 8 rest against the bottom nozzle 7. A guide tube screw 12 fixes a guide tube 3 to the bottom nozzle 7. Figure 5 shows in enlarged form an end plug 11 intended to be screwed or welded to a guide tube 3. The end plug 11 is provided with tongues 10 intended to engage into slots 9, which are provided on the bottom sleeves, and which are shown on enlarged scale in Figure 6.

When a guide tube 3, with an end plug 11 thereto, is inserted into the bottom sleeve 8, the tongues 10 of the end plug 11 slide into the slots 9 of the bottom sleeve 8, the guide tube 3 thus becoming locked against rotational movement relative to the bottom sleeve 8. As mentioned before, the bottom sleeve 8 in its turn is rigidly fixed to the bottom spacer 5.

The slots 9 and the tongues 10, respectively, in the bottom sleeve 8 and the guide tube 3 may, of course, be arranged in different ways. For example, conversely to the embodiment described, the tongues could be attached to the bottom sleeves 8 and the slots could be provided at the end plug 11 of the guide tubes. The main thing is that the guide tube is locked in a simple manner to the rigidly arranged bottom sleeve 8. The locking should be of such a nature that the guide tube 3 can be detached, without difficulty, when the guide tube screw 12 is removed.

## Claims

1. Fuel assembly for a nuclear reactor, preferably of PWR type, with a number of parallel fuel rods (2) which are held together by means of spacers (4, 5) arranged along the fuel rods as well as guide tubes (3) arranged between the fuel rods (2) in parallel therewith, said guide tubes (3) extending through the spacers (4, 5), with a top nozzle (6) and a bottom nozzle (7) between which the guide tubes (3) are fixed, and with bottom sleeves (8) for the guide tubes (3) being attached to the spacer (5) nearest the bottom nozzle (7), said guide tubes resting against the bottom nozzle (7), **characterized** in that said bottom sleeves (8) are rigidly fixed to said spacer (5) and that said bottom sleeves (8) are provided with a first locking member (9) for engaging in such a way with a second locking member (10), arranged at the end of a guide tube, that the guide tube (3) is releasably rigidly locked in the direction of rotation.

2. Fuel assembly according to claim 1, **characterized** in that the first locking member consists of at least one slot (9) for receiving the second locking member which consists of at least one tongue (10).

## Patentansprüche

1. Brennelement für einen Kernreaktor, vorzugsweise vom PWR-Typ, mit einer Anzahl paralleler Brennstäbe (2), die durch Abstandshalter (4, 5), die längs der Brennstäbe angeordnet sind, zusammengehalten werden, sowie mit Führungsrohren (3), die zwischen den Brennstäben (2) und parallel zu diesen angeordnet sind, wobei die Führungsrohre (3) sich durch die Abstandshalter (4, 5) erstrecken, mit einem Kopfstück (6) und einem Fußstück (7), zwischen denen die Führungsrohre (3) befestigt sind, und mit Bodenhülsen (8) für die Führungsrohre (3), welche Bodenhülsen an dem dem Fußstück (3) nächstgelegenen Abstandshalter (5) befestigt sind, wobei die Führungsrohre auf dem Fußstück (7) ruhen, **dadurch gekennzeichnet,** daß die Bodenhülsen (8) fest mit dem genannten Abstandshalter (5) verbunden sind und daß die Bodenhülsen (8) mit einem ersten Verriegelungsglied (9) ausgerüstet sind, welches in solcher Weise mit einem zweiten Verriegelungsglied (10), welches am Ende des Führungsrohres angeordnet ist, verriegelbar ist, daß das Führungsrohr (3) in lösbarer Weise in Drehrichtung fest verriegelt ist.

2. Brennelement nach Anspruch 1, **dadurch gekennzeichnet,** daß das erste Verriegelungsglied aus mindestens einem Schlitz (9) zur Aufnahme des zweiten Verriegelungsgliedes besteht, welches aus mindestens einer zunge (10) besteht.

## Revendications

1. Assemblage combustible pour un réacteur nucléaire, de préférence du type à eau sous pression (PWR), comportant un certain nombre de crayons combustibles (2) parallèles qui sont maintenus ensemble au moyen d'entretoises (4, 5) agencées le long des crayons combustibles, ainsi que par des tubes de guidage (3) agencés entre les crayons combustibles (2) et parallèlement à ces derniers, les tubes de guidage (3) s'étendant à travers les entretoises (4, 5), comportant une buse supérieure (6) et une buse inférieure (7) entre lesquelles les tubes de guidage (3) sont fixés, et comportant des gaines inférieures (8) pour les tubes de guidage (3), qui sont fixées à l'entretoise (5) la plus proche de la buse inférieure (7), ces tubes de guidage reposant sur la buse inférieure (7), caractérisée en ce que les gaines inférieures (8) sont fixées de manière rigide à l'entretoise (5) et en ce que les gaines inférieures (8) sont munies d'un premier élément de verrouillage (9) destiné à coopérer avec un second élément de verrouillage (10) prévu à l'extrémité du tube de guidage, de telle manière que le tube de guidage (3) soit verrouillé, dans le sens de la rotation, de façon rigide et déverrouillable .

2. Assemblage combustible suivant la revendication 1, caractérisé en ce que le premier élément de verrouillage est constitué d'au moins une fente (9) destinée à recevoir le second élément de verrouillage qui est constitué d'au moins une patte (10).
